# EUROPEAN PATENT APPLICATION

(11) **EP 4 000 928 A1**
(43) Date of publication of application: **25.05.2022**
(21) Application number: 20208492.7
(22) Date of filing: 18.11.2020
(51) Int. Cl.: B33Y 10/00, B29C 64/00, B33Y 80/00, C04B 41/00, C09D 11/03, C09D 11/04, C09D 11/10, C09D 11/14, B33Y 70/10

(54) **INK COMPOSITION FOR 3D PRINTING, PROCESS FOR MAKING A CERAMIC GREEN BODY BY 3D PRINTING, AND PROCESS FOR MAKING A SINTERED CERAMIC COMPONENT PART**

(71) Applicant: 3M Innovative Properties Company, Saint Paul, MN 55133-3427 (US)
(72) Inventor: Daub, Dominik, 87435 Kempten (DE); Uibel, Krishna, 67346 Speyer (DE); Kayser, Ursula, 87474 Buchenberg (DE); Ludwig, Theresa, 85354 Freising (DE); Rumbucher, Jochen, 87439 Kempten (DE); Wildhack, Stefanie, 87437 Kempten (DE)
(74) Representative: Mössner, Brigitte

(57) **Abstract**

The present disclosure relates to an ink composition for 3D printing, the ink composition comprising non-oxide ceramic particles, a liquid, and two additives selected from one of the following combinations:
(i) a first additive and a second additive,
(ii) a first additive and a third additive,
(iii) a second additive and a third additive,
and wherein the first additive is a polysaccharide, a polypeptide, or a combination thereof, and wherein the second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof, and wherein the third additive is a lubricant or a tenside, or a combination thereof.

The present disclosure further relates to a process for making a ceramic green body by 3D printing and to a process for making a sintered ceramic component part.

## Description

### Technical Field

The present disclosure relates to an ink composition for 3D printing, the ink composition comprising non-oxide ceramic particles, a ceramic green body made by 3D printing, and to a non-oxide ceramic component part made by a 3D printing process and subsequent sintering.

### Background

Dense ceramic parts are widely produced using standard forming methods, e.g. pressing, extrusion or injection molding. For complex components, time consuming and cost inefficient processing including green machining, white machining or hard machining are often necessary. New technologies like additive manufacturing, also known as three-dimensional ("3D") printing, are capable of producing parts with a high freedom of design by a layer by layer construction and less material consumption. There are a variety of techniques of 3D printing, for example based on powder-bed such as binder jetting, based on UV-curable resins such as vat photopolymerization or other stereolithographic methods, or based on extrusion such as fused filament fabrication or robocasting, which have been adapted to processing ceramics and composites. Recent developments focused on the fabrication of 3D printed oxide ceramics like silica, alumina, zirconium oxide or titanium dioxide for use as technical ceramics, catalysts or for medical applications.

3D printing of non-oxide ceramics like carbides, nitrides or borides is still a challenge. 3D printed parts of non-oxide ceramics need to be sufficiently dense, homogeneous and mechanically stable for the subsequent post-processing of 3D printed parts at high temperatures, under inert atmosphere or pressure to obtain dense, mechanically stress-resistant parts.

A method that has been used for shaping of ceramic materials like clay, UV curable polymer mixtures and concrete is robocasting, also known as direct ink writing or liquid deposition modeling (LDM). This technology uses an ink comprising organic binders combined with a liquid to extrude high-viscosity materials through fine nozzles. Compared to other additive manufacturing techniques, the low demand of organics and easy preparation of the starting material is advantageous. Nevertheless, the binder formulation can strongly influence the rheological behavior, layer stability and densification of the ceramic material which is why the binder materials have to be carefully chosen.

Feilden et al. (Journal of the European Ceramic Society 36 (2016), 2525 - 2533) use a hydrogel ink for robocasting of a liquid-phase sintered silicon carbide (LPS-SiC) and obtain dense parts with 95% of theoretical density by subsequent pressureless sintering. A block copolymer binder from ethylene oxide and propylene oxide monomers (Pluronic F-127) was used. Before 3D printing, the ink comprising the binder and ceramic raw materials for LPS-SiC was cooled to 0 °C and the temperature was then increased up to 23 °C in a controlled manner. A disadvantage of this process is the required costly and time-consuming cooling process.

Cai et al. (Journal of the American Ceramic Society, 1-7 (2012)) describe robocasting of LPS-SiC parts with high and low molecular weight polyethylenimine and methylcellulose in water. A low-pressure spark plasma sintering method is used to achieve parts with a theoretical density up to 97%.

Zhao et al. (International Journal of Applied Ceramic Technology 2017; 14: 117-127) use the same binder system for shaping silicon nitride parts via robocasting for biomedical applications. A combination of sintering and hot isostatic pressing lead to almost full densification of the debindered parts. A disadvantage of this 3D printing process is that the subsequent densification process needs to be carried out by hot isostatic pressing which is expensive and time-consuming.

WO 2020/046687 A1 discloses a method of making a non-oxide ceramic part by vat photopolymerization as 3D printing method, using a photopolymerizable slurry, curing the photopolymerizable slurry to obtain a gelled article, drying the gelled article to obtain an aerogel article or a xerogel article, heat treating the aerogel article or the xerogel article to form a porous ceramic article, and sintering the porous ceramic article to obtain a sintered ceramic article. The photopolymerizable slurry includes non-oxide ceramic particles, at least one radiation curable monomer, a solvent, a photoinitiator, an inhibitor, and at least one sintering aid. The photopolymerizable slurry is cost-intensive and the vat photopolymerization 3D printing process is characterized by small 3D printing substrates which limit the part size and applications.

There is still a need for a cost-efficient process for 3D printing of non-oxide ceramics which allows to produce dense, mechanical stress-resistant non-oxide ceramic component parts by subsequent sintering.

Furthermore, there is a need for a cost-efficient process for 3D printing of polymer-ceramic composites with high loadings of ceramic filler which allows to produce highly filled polymer-ceramic composites, such as highly filled polymer-boron nitride composites, that can be used for improvement of certain material properties such as thermal conductivity or electrical insulation.

As used herein, "a", "an", "the", "at least one" and "one or more" are used interchangeably. The term "comprise" shall include also the terms "consist essentially of" and "consists of".

### Summary

In a first aspect, the present disclosure relates to an ink composition for 3D printing, the ink composition comprising non-oxide ceramic particles, a liquid, and two additives selected from one of the following combinations:
(i) a first additive and a second additive,
(ii) a first additive and a third additive,
(iii) a second additive and a third additive,
and wherein the first additive is a polysaccharide, a polypeptide, or a combination thereof, and wherein the second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof, and wherein the third additive is a lubricant or a tenside, or a combination thereof.

In another aspect, the present disclosure also relates to a process for making a ceramic green body by 3D printing comprising
providing an ink composition for 3D printing as disclosed herein,
extruding the ink composition and depositing the extruded ink composition on a substrate layer by layer, and
post-processing the extruded ink composition,
thereby obtaining a 3D printed ceramic green body.

In yet a further aspect, the present disclosure relates to a process for making a sintered ceramic component part comprising
3D printing a ceramic green body by the process disclosed herein,
debindering the 3D printed ceramic green body, and
sintering the ceramic green body to obtain a sintered ceramic component part.

In yet a further aspect, the present disclosure relates to a sintered ceramic component part made by the process disclosed herein, wherein the sintered ceramic component part has a density of at least 90% of theoretical density.

With the process for making a ceramic green body disclosed herein, articles of more complex shapes can be manufactured, compared to conventional ceramic shaping methods. Also, larger articles can be manufactured than with other 3D printing techniques such as vat photopolymerization.

With the process for making a ceramic green body disclosed herein, the number of process steps for manufacturing sintered ceramic component parts can be reduced. Cost-intensive manufacturing of tools for shaping of ceramic green bodies by pressing of ceramic powders, and time-consuming changes of these tools for pressing are not required. As articles of complex shape can be manufactured by the 3D printing process disclosed herein, green machining steps can be omitted. Depending on the application, also hard machining steps may not be required. The process for making a ceramic green body disclosed herein allows fast geometry and material changes.

Dense sintered ceramic components parts can be obtained by the process for making a sintered ceramic component part disclosed herein, by the process for making a ceramic green body disclosed herein and subsequent sintering. Typically, no re-densification process, such as a post-HIP densification process, is required after sintering.

### Detailed Description

The ink composition for 3D printing disclosed herein comprises ceramic particles, a liquid, and two additives. The ceramic particles are non-oxide ceramic particles. The two additives are selected from one of the following three combinations:
(i) a first additive and a second additive,
(ii) a first additive and a third additive,
(iii) a second additive and a third additive.

The first additive is a polysaccharide, a polypeptide, or a combination thereof. The second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof. The third additive is a lubricant or a tenside, or a combination thereof.

The second additive may be in the form of a hardenable resin. The hardenable resin may be a one-component resin (1K) or a two-component resin (2K).

The first additive typically acts as dispersant preventing phase separation of the liquid and the solid phase. The first additive also may be a rheological agent, on the one hand increasing the viscosity of the ink for 3D printing at low shear rates leading to higher stability of the 3D printed layers, and on the other hand also effecting a shear thinning behavior under pressure which ensures good extrusion properties. The first additive also has a binding function.

The first additive may have an influence on the adhesion of the ceramic particles on the substrate for 3D printing to secure stable processing. The first additive may also have an influence on the adhesion in between the 3D printed layers to prevent delamination of the 3D printed layers. However, with increasing stickiness, there is a higher tendency of increasing printing defects, which restricts the upper limit of the amount of the first additive in the ink composition.

The second additive enhances the binding function to achieve sufficient green stability. Furthermore, the second additive may be able to compensate the high stickiness of the first additive and reduce possible printing defects.

The third additive typically has an influence on the slipping properties of the ceramic particles in the ink and in contact to the nozzle walls of the extrusion nozzle used for 3D printing, and it will thereby improve the formation of a homogeneously and continuously extrudable strand.

If the two additives are a combination of a first additive and a second additive, the ink composition may comprise more than one first additive, and the ink composition may also comprise more than one second additive. For example, the ink composition may comprise two or three or more first additives, and the ink composition may comprise two or three or more second additives.

If the two additives are a combination of a first additive and a third additive, the ink composition may comprise more than one first additive, and the ink composition may also comprise more than one third additive. For example, the ink composition may comprise two or three or more first additives, and the ink composition may comprise two or three or more third additives.

If the two additives are a combination of a second additive and a third additive, the ink composition may comprise more than one second additive, and the ink composition may also comprise more than one third additive. For example, the ink composition may comprise two or three or more second additives, and the ink composition may comprise two or three or more third additives.

The ink composition disclosed herein comprises a liquid. The liquid may be water or an organic solvent such as hydrocarbons or alcohols, or combinations thereof. A suitable hydrocarbon is hexane, suitable alcohols are ethanol and isopropanol. Preferably, the liquid is water.

The first additive is a polysaccharide, a polypeptide, or a combination thereof. Examples for polysaccharides are cellulose and derivatives thereof, such as cellulose ether and cellulose ester, modified starch or derivatives of starch such as hydroxyethyl starch, dextrin, cyclodextrin, alginic acid, salts of alginic acid, esters of alginic acid, pectin, and agar-agar. Examples for cellulose ether are methyl cellulose, ethyl cellulose, and hydroxyethyl cellulose. Examples for polypeptides are casein and globular or fibrous proteins such as egg white or collagen.

The second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof. An example for a polyvinyl acetal is polyvinyl butyral (PVB). Examples for polyethers are polyethylene glycol (PEG), polypropylene glycol (PPG), and epoxies. Examples for polyacrylates are ammonium polyacrylate, ammonium polymethacrylate, acrylic resin, and acrylic polymer dispersions. An example for a polycarboxylate is ammonium polycarboxylate. Examples for polyvinyl esters are polyvinyl acetate, and polyvinyl propionate. Examples for polysiloxanes are polydimethylsiloxane, silicone resins, and silicone oils.

The third additive is a lubricant or a tenside, or a combination thereof. The lubricant of the third additive may be selected from the group consisting of a fatty acid, a triglyceride, an isoprenoide, glycerol, a wax or combinations thereof. The fatty acids may be saturated fatty acids such as stearic acid, monounsaturated fatty acids such as oleic acid, or polyunsaturated fatty acids such as linoleic acid. Triglycerides are tri-esters derived from glycerol and three fatty acids, with the fatty acids being saturated fatty acids, monounsaturated fatty acids or polyunsaturated fatty acids as described above. Examples for isoprenoides are carotinoides or steroids. The wax may be a natural wax such as beeswax, a semisynthetic wax or synthetic wax such as polyolefin wax.

The tenside of the third additive may be an anionic tenside, a cationic tenside, a nonionic tenside, or a combination thereof. Suitable anionic tensides are for example alkyl carboxylates such as sodium salt of stearic acid. An example for a nonionic tenside is polyoxyethylene (20) sorbitan monostearate (Polysorbat 60).

In some embodiments of the ink composition disclosed herein, the ink composition comprises a first additive, a second additive and a third additive. The ink composition may also comprise more than one first additive, and the ink composition may also comprise more than one second additive, and the ink composition may also comprise more than one third additive. For example, the ink composition may comprise two or three or more first additives, and the ink composition may comprise two or three or more second additives, and the ink composition may comprise two or three or more third additives. The first additive is a polysaccharide, a polypeptide, or a combination thereof. The second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof. The third additive is a lubricant or a tenside, or a combination thereof.

In some embodiments, the ink composition comprises the first additive and the second additive, and the first additive comprises a polysaccharide, and the second additive comprises a polyvinyl acetal. The polysaccharide preferably is methyl cellulose, and the polyvinyl acetal preferably is polyvinyl butyral (PVB). In some embodiments, the ink composition comprises the first additive and the second additive, and the first additive is methyl cellulose, and the second additive is polyvinyl butyral (PVB).

In some embodiments of the ink composition, with the ink composition comprising the first additive and the second additive, and with the first additive comprising a polysaccharide, and with the second additive comprising a polyvinyl acetal, the ink composition further comprises the third additive, the third additive preferably is selected from the group comprising glycerol, a fatty acid, a tenside, or combinations thereof. A suitable tenside is polyoxyethylene (20) sorbitan monostearate (Polysorbat 60). The polysaccharide preferably is methyl cellulose, and the polyvinyl acetal preferably is polyvinyl butyral (PVB). In some embodiments, the ink composition comprises the first additive, the second additive, and the third additive, and the first additive is methyl cellulose, and the second additive is polyvinyl butyral (PVB), and the third additive is glycerol.

In some embodiments of the ink composition, with the ink composition comprising the first additive and the second additive, and with the first additive comprising a polysaccharide, and with the second additive comprising a polyvinyl acetal, the first additive further comprises a further polysaccharide, and the second additive further comprises a polycarboxylate. The further polysaccharide preferably is dextrin, and the polycarboxylate preferably is ammonium polycarboxylate.

In some embodiments, the ink composition comprises the first additive and the second additive, and the first additive comprises a polysaccharide or a polypeptide, and the second additive comprises a polyvinyl acetal. The polysaccharide preferably is methyl cellulose or dextrin or a salt of alginic acid, and the polypeptide preferably is casein. The polyvinyl acetal preferably is polyvinyl butyral (PVB). A suitable salt of alginic acid is ammonium alginate. In some embodiments, the ink composition comprises the first additive and the second additive, and the first additive is a salt of alginic acid such as ammonium alginate, and the second additive is polyvinyl butyral (PVB).

In some embodiments, the ink composition comprises the first additive and the second additive, and the first additive is a polysaccharide, and the second additive is polyvinyl alcohol (PVA), a polyether, a polyacrylate, or a polyvinyl acetal. The polysaccharide preferably is methyl cellulose. The polyether preferably is polyethylene glycol (PEG), the polyacrylate preferably is ammonium polymethacrylate, and the polyvinyl acetal preferably is polyvinyl butyral (PVB). In some embodiments, the ink composition comprises the first additive and the second additive, and the first additive is methyl cellulose, and the second additive is polyvinyl alcohol (PVA).

In some embodiments, the ink composition comprises the first additive and the third additive, and the first additive is a polysaccharide, and the third additive is a lubricant. The polysaccharide preferably is methyl cellulose, and the lubricant preferably is glycerol.

The ink composition disclosed herein comprises non-oxide ceramic particles. The non-oxide ceramic particles are selected from the group consisting of carbide particles, nitride particles, boride particles, and molybdenum disilicide particles, or mixtures thereof. Preferably, the non-oxide ceramic particles are selected from the group consisting of silicon carbide particles, silicon nitride particles, boron carbide particles, hexagonal boron nitride particles, titanium diboride particles, zirconium diboride particles, or mixtures thereof. In some embodiments, the non-oxide ceramic particles are silicon carbide particles or silicon nitride particles or mixtures thereof.

The non-oxide ceramic particles may have a mean particle size (dso) of 1 µm to 10 µm, of 500 nm to 1.5 µm, or of 250 nm to 1 µm. The mean particle size (dso) can also be referred to as average particle size diameter (d₅₀) and is that particle size diameter at which 50% by volume of the particles have that diameter or a smaller diameter, as measured by laser diffraction. The non-oxide ceramic particles may also be in the form of granulates or agglomerates of non-oxide ceramic particles with primary particles having a mean particle size (d₅₀) of 1 µm to 10 µm, of 500 nm to 1.5 µm, or of 250 nm to 1 µm. The mean agglomerate size (dso) of the granulates or agglomerates typically is from 20 µm to 500 µm.

The ink composition disclosed herein may comprise from 40% up to 90% by weight of non-oxide ceramic particles, based on the total weight of the ink composition. In some embodiments, the ink composition comprises from 55% up to 80% by weight of non-oxide ceramic particles, based on the total weight of the ink composition. In some embodiments, the ink composition comprises from 60% up to 75% by weight of non-oxide ceramic particles, based on the total weight of the ink composition. In some embodiments, the ink composition comprises from 64% up to 72% by weight of non-oxide ceramic particles, based on the total weight of the ink composition.

For amounts of the non-oxide ceramic particles in the ink composition of more than 90% by weight, the viscosity of the ink composition may be too high and the extrusion ability of the ink composition may be reduced. For amounts of the non-oxide ceramic particles in the ink composition of less than 35% by weight, the density of the sintered ceramic component part may be too low.

The ink composition disclosed herein may comprise from 0.1 to 10% by weight of the first additive, based on the total weight of the ink composition. In some embodiments, the ink composition comprises from 0.1 to 5% by weight of the first additive, based on the total weight of the ink composition. In some embodiments, the ink composition comprises from 0.15 to 3% by weight of the first additive, based on the total weight of the ink composition.

The ink composition disclosed herein may comprise from 0.1 to 15% by weight of the second additive, based on the total weight of the ink composition. In some embodiments, the ink composition comprises from 1 to 15% by weight of the second additive, based on the total weight of the ink composition. In some embodiments, the ink composition comprises from 2.5 to 10% by weight of the second additive, based on the total weight of the ink composition. In some embodiments, the ink composition comprises from 3 to 8% by weight of the second additive, based on the total weight of the ink composition.

The ink composition disclosed herein may comprise from 0.1 to 5% by weight of the third additive, based on the total weight of the ink composition. In some embodiments, the ink composition comprises from 0.1 to 1% by weight of the third additive, based on the total weight of the ink composition.

The ink composition disclosed herein may comprise from 10 to 50% by weight of the liquid, based on the total weight of the ink composition. In some embodiments, the ink composition may comprise 20 to 30% by weight of the liquid, based on the total weight of the ink composition.

The ink composition disclosed herein may further comprise inorganic additives. The inorganic additives may have the function of sintering aids. Sintering aids may comprise aluminum oxide, silicon oxide, lithium oxide, sodium oxide, potassium oxide, magnesium oxide, calcium oxide, strontium oxide, barium oxide, scandium oxide, yttrium oxide, lanthanum oxide, titanium oxide, zirconium oxide, hafnium oxide, niobium oxide, an oxide of any lanthanide such as cerium oxide, samarium oxide, gadolinium oxide, ytterbium oxide, lutetium oxide, carbon, boron, boron carbide, boron oxide, boron nitride, borates, aluminum nitride, aluminum or combinations thereof.

The amount of sintering aids in the ink composition typically is from 0.01 to 20% by weight, based on the amount of the non-oxide ceramic particles.

Further disclosed herein is a process for making a ceramic green body by 3D printing comprising
providing an ink composition for 3D printing as disclosed herein,
extruding the ink composition and depositing the extruded ink composition on a substrate layer by layer, and
post-processing the extruded ink composition,
thereby obtaining a 3D printed ceramic green body.

For the process for making a ceramic green body by 3D printing as disclosed herein, the ink composition as disclosed herein is used. The ink composition is described more in detail above.

The 3D printing process may be carried out by liquid deposition modeling, sometimes also called robocasting or direct ink writing. Liquid deposition modeling is a method of additive manufacturing or 3D printing for which a liquid ink is used and extruded through a nozzle and deposited on a substrate, thereby producing a filamentary structure comprising a continuous strand or droplets of deposited material. The 3D printing process may also be carried out by other printing methods, for example by multi-jet modeling.

In the 3D printing process, the ink composition is extruded and the extruded ink composition is deposited on a substrate layer by layer. For depositing the extruded strand on a substrate, a 3D printer or a robot may be used.

The ink composition is extruded through a nozzle and a continuous strand or droplets are deposited. The continuous strand or the droplets are deposited in-plane and then built up layer by layer. For depositing the continuous strand or droplets on the substrate, the nozzle is moved, for example using a positioning robot. The positioning robot may be a 3-axis robot with a robot arm, a delta positioning equipment or a positioning robot with linear guiding.

In some embodiments, only one single layer of the extruded ink is deposited on the subtrate. An application example where only one single layer may be deposited are heat spreaders for LED applications, where heat is spreaded within a layer having a high in-plane thermal conductivity.

In some embodiments, a plurality of layers of the extruded ink is deposited on the substrate. As used herein, "a plurality of layers" means that at least two layers or more layers are deposited. The number of layers is not particularly limited, for example, 5, 10, 20, 30, 50, 100 or more layers may be deposited. The extruded ink may be deposited continuously on the substrate without interruptions, or may be deposited in multiple portions, each portion being deposited continuously.

The extruded ink is deposited with high filling density to avoid large gaps in the 3D printed ceramic green body which would result in high porosity of the sintered ceramic component parts. Gaps between different portions of the continuous strand or between the droplets can be minimized by adjusting parameters in the slicing software used for 3D printing.

Depending on the design of the 3D printer or the application, the thickness and width of the continuous strand may be from a few micrometers for small and precise parts, for example in medical or dental applications, to several centimeters for larger parts. Typically, the thickness and width of the continuous strand is from 10 to 2000 µm.

The substrate on which the extruded ink composition is deposited is made from a material on which the extruded ink composition adheres sufficiently. Suitable materials may be selected from metallic materials, ceramic materials and polymer materials. The surface of the substrate may be flat or non-flat. The surface of the substrate may be rough or polished. Also sieve grids may be used as substrate.

After extruding the ink composition and depositing the extruded ink composition on a substrate layer by layer, the extruded ink composition is post-processed. Post-processing may be carried out by drying and/or hardening and/or curing. Drying may be carried out at ambient conditions, in a drying furnace at elevated temperatures below the decomposition temperature of the organic additives, or by freeze drying. By hardening or curing, a consolidation of the extruded strand is achieved. As used herein, "hardening" or "curing" are used interchangeably and refer to polymerization and/or crosslinking reactions. Curing may be carried out by using UV light or thermal treatment. By curing, monomers of the additives, particularly of the second additive, are polymerized, and/or polymer chains with functional groups of the additives, particularly of the second additive, are cross-linked.

The post-processed ink composition, i.e. the ceramic green body, may comprise up to 30% by weight, or up to 20% by weight, or up to 15% by weight, or up to 10% by weight, or up to 5% by weight of an organic material, based on the total weight of the ceramic green body. This organic material results from the first, second and third additive after post-processing.

In some embodiments, the organic material serves as a permanent binder for the non-oxide ceramic particles. The organic material may be an acrylic material or an epoxy material, for example. The non-oxide ceramic particles may be hexagonal boron nitride, aluminum nitride, silicon carbide particles, or silicon nitride particles, for example. When the organic material serves as a permanent binder for the non-oxide ceramic particles, the ceramic green body, which is obtained by the process for making a ceramic green body by 3D printing disclosed herein, requires no subsequent debindering and sintering step and can therefore also be referred to as a ceramic composite body. The ceramic composite body is a highly filled ceramic composite body, with high loadings of non-oxide ceramic particles in an organic matrix. The ceramic composite body may comprise the organic material in an amount of up to 30% by weight, or up to 20% by weight, or up to 15% by weight, or up to 10% by weight, or up to 5% by weight, based on the total weight of the ceramic composite body.

Further disclosed herein is a process for making a sintered ceramic component part comprising
3D printing a ceramic green body by the process disclosed herein,
debindering the 3D printed ceramic green body, and
sintering the ceramic green body to obtain a sintered ceramic component part.

By debindering the 3D printed ceramic green body, the first, second and third additive is decomposed partially or completely. By debindering, the first, second and third additive may be at least partially converted to carbon. Debindering is carried out at temperatures up to 800 °C, depending on the decomposition behavior of the respective first, second and third additives used for the ink composition. For debindering, inert or oxygen containing atmospheres may be applied.

Sintering of the ceramic green body may be carried out as a pressureless sintering process, or as a gas-pressure sintering process, or as a hot-pressing process. Sintering of the ceramic green body may be carried out by sintering processes for non-oxide ceramics known in the art. In some embodiments, sintering of the debindered ceramic green body may be carried out as a pressureless sintering process or as a gas-pressure sintering process, and sintering of the ceramic green body does not comprise hot-isostatic pressing (HIP), and sintering the ceramic green body does not comprise spark plasma sintering, and sintering the debindered ceramic green body does not comprise reaction-bonding and subsequent sintering or HIP.

Sintering is typically carried out at temperatures of 1500 to 2300 °C in an inert gas atmosphere. Pressureless sintering is carried out at a pressure of 1 bar or below. For gas-pressure sintering, typically a pressure of up to 100 bar is applied. For hot-pressing, typically a pressure of up to 50 MPa is applied.

The sintered ceramic component part made by the process disclosed herein may have a density of at least 90% of theoretical density. In some embodiments, the sintered ceramic component part made by the process disclosed herein has a density of at least 94%, or of at least 97%, or of at least 99% of theoretical density.

The density of the sintered ceramic component part is measured by the Archimedes method.

The theoretical density of the sintered ceramic component part is the density of the pure non-oxide ceramic material without pores. For pressureless sintered silicon carbide, the theoretical density is 3.21 g/cm³. For liquid phase sintered silicon carbide, the theoretical density is calculated by the density of the pure silicon carbide, which is 3.21 g/cm³, and the densities of each of the oxide phases or other inorganic additives used as sintering aids, and the respective fractions of silicon carbide and the oxide phases or other inorganic additives used as sintering aids in the sintered ceramic component part. For gas pressure sintered silicon nitride, the theoretical density is calculated by the density of the pure silicon nitride, which is 3.17 g/cm³, and the densities of each of the oxide phases or other inorganic additives used as sintering aids, and the respective fractions of silicon nitride and the oxide phases or other inorganic additives used as sintering aids in the sintered ceramic component part.

The sintered ceramic component part made by the process disclosed herein may comprise pressureless sintered silicon carbide (SSiC), liquid phase sintered silicon carbide (LPS-SiC), gas-pressure sintered silicon nitride (SSN), pressureless sintered boron carbide or combinations thereof. In some embodiments, the sintered ceramic component part made by the process disclosed herein may consist of pressureless sintered silicon carbide (SSiC), liquid phase sintered silicon carbide (LPS-SiC), gas-pressure sintered silicon nitride (SSN), pressureless sintered boron carbide or combinations thereof.

The ceramic composite body comprising an organic material may be used for thermal management applications in electronics, to improve durability and wear resistance in abrasive or erosive applications, for aerospace applications, for electrical insulation and low dielectric loss applications, for corrosive applications, or for lightweight designs of structural parts.

The sintered ceramic component part may be used for a large number of applications, for example refractory parts, lightweight parts, and ceramic parts being highly resistant to wear, erosion, chemical corrosion and thermal stresses. Specific application areas are light weight armor, shields, transportation, oil and gas, fuel cells, electronics, aerospace and energy generation.

### Examples

### Example 1

An aqueous suspension of silicon carbide powder having a mean particle size dso of 0.6 µm (measured by laser diffraction, wet measurement) and a specific surface area (BET) of 12 m²/g, with added boron carbide powder and carbon as sintering aids, is spray-dried. The spray-dried granules have a mean particle size dso of 24 µm (measured by laser diffraction, dry measurement). 70.0 g of the spray-dried granules are mixed with 0.3 g of methyl cellulose (Culminal^{™} MC 3000 P, available from Ashland Inc., Covington, Kentucky, USA) and 14.0 g of an aqueous polyvinyl butyral (PVB) emulsion (Aquarez PVB 605, available from Aquaspersions Ltd., Halifax, UK) in a mixing bowl. Then, 15.7 ml deionized water are added and mixed with a SpeedMixer^{™} (available from Hauschild & Co KG, Hamm, Germany) for 30 seconds at 1000 rpm, then for 60 seconds at 1500 rpm, resting for 60 seconds to prevent overheating, and then again mixed for 30 seconds at 1000 rpm. Thereby, an ink suitable for 3D printing, i.e. for extrusion and layer deposition, is obtained. The ink composition comprises a first additive and a second additive (see Table 1).

For 3D printing by liquid deposition modeling, the ink is filled into a Delta WASP 2040 Clay printer (available from CSP s.r.l., Massa Lombarda, Italy) and processed at room temperature (23 °C) layer by layer. The ink is extruded through a stainless steel nozzle with a layer thickness of 0.4 mm and a nozzle diameter of 0.7 mm and deposited on a steel substrate building up a cubic geometry with dimensions of 30 x 22.5 x 3.75 mm³. Printing parameters were adjusted to obtain high filling density to reduce voids in the 3D printed layers and 3D printed part. The extruded and deposited ink is subsequently dried at room temperature (23 °C) for several days, thereby obtaining a 3D printed ceramic green body. The ceramic green body is debindered and pressureless sintered at a temperature of 2050 °C for 30 minutes in an argon atmosphere. The density of the obtained pressureless sintered silicon carbide component part was 3.03 g/cm³ determined by the Archimedes method, corresponding to 94% of theoretical density. The ink composition and the density of the sintered component part are shown in Table 1. Also shown in Table 1 are the shrinkage and the weight loss of the ceramic green body by debindering and sintering.

In Table 1, the "content of ceramics" in the second column refers to the sum of the amount of non-oxide ceramic particles and the amount of inorganic additives such as sintering aids, based on the total amount of the ink composition.

The sintered density is measured by the Archimedes method.

### Examples 2 to 14

For Examples 2 to 14, Example 1 is repeated, with different ink compositions according to Table 1. For Examples 2 to 9, a first additive and a second additive are used. For Examples 10 to 12, a first additive, a second additive and a third additive are used. For Example 13, two different first additives and two different second additives are used (see Table 1). For Example 14, a first additive and a third additive are used.

The preparation of the ink composition, extruding and depositing the ink composition, drying, debindering and sintering are carried out as described for Example 1. The ink composition and the density of the sintered component part (pressureless sintered silicon carbide) are shown in Table 1. Also shown in Table 1 are the shrinkage and the weight loss of the ceramic green body by debindering and sintering.

The first, second and third additives used for the Examples are shown in Table 2.

### Example 15

For Example 15, Example 1 is repeated, with a different ink composition comprising silicon nitride powder. For preparing the ink composition, an aqueous suspension of silicon nitride powder having a mean particle size d₅₀ of 0.75 µm (SN-E10, available from UBE America, Inc., USA) is spray-dried with addition of Al₂O₃ (CT3000, available from Almatis GmbH, Frankfurt, Germany) and of Y₂O₃ (Treibacher Industries AG, Althofen, Austria) as sintering aids. The mean particle size of the silicon nitride powder is measured by laser diffraction (wet measurement). The amount of Al₂O₃ is 5 wt.-%, the amount of Y₂O₃ is also 5 wt.-%, and the amount of silicon nitride powder is 90 wt.-%, based on the total amount of the spray-dried granules. The spray-dried granules have a mean particle size d₅₀ of 27 µm (measured by laser diffraction, dry measurement). 69.0 g of the spray-dried granules are mixed with 1.0 g of methyl cellulose (Culminal^{™} MC 3000 P, available from Ashland Inc., Covington, Kentucky, USA) and 13.0 g of an aqueous polyvinyl butyral (PVB) emulsion (Aquarez PVB 605, available from Aquaspersions Ltd., Halifax, UK) in a mixing bowl. Then, 17.5 ml deionized water are added and homogenized with a SpeedMixer^{™} (available from Hauschild & Co KG, Hamm, Germany) with the mixing procedure of Example 1. To optimize homogenization, a repetition of the mixing procedure described for Example 1 was performed under a low pressure of 800 mbar. Thereby, an ink suitable for 3D printing, i.e. for extrusion and layer deposition, was obtained. The ink composition comprises a first additive and a second additive (see Table 1).

3D printing is carried out as described for Example 1. The ceramic green body is debindered and subsequently gas-pressure sintered at a temperature of 1825 °C and a pressure of 100 bar for 1 hour.

The ink composition and the density of the sintered component part (gas-pressure sintered silicon nitride) are shown in Table 1. Also shown in Table 1 are the shrinkage and the weight loss of the ceramic green body by debindering and sintering.

For the high-density 3D printed silicon nitride samples, porosity measurements are carried out using image analysis according to DIN EN ISO 4499-4 (2016-10-00), resulting in a low pore area value of 0.041 % with a maximum pore size of 122.5 µm.

### Examples 16 and 17

For Examples 16 and 17, Example 15 is repeated, with different ink compositions according to Table 1.

The preparation of the ink composition, extruding and depositing the ink composition, drying, debindering and sintering are carried out as described for Example 15. The ink composition and the density of the sintered component part (gas-pressure sintered silicon nitride) are shown in Table 1. Also shown in Table 1 are the shrinkage and the weight loss of the ceramic green body by debindering and sintering.

The first, second and third additives used for the Examples are shown in Table 2.

For the high-density 3D printed silicon nitride samples, porosity measurements are carried out using image analysis according to DIN EN ISO 4499-4 (2016-10-00), resulting in a low pore area value of 0.015 % (Example 16) with a maximum pore size of 15.4 µm (Example 16).

### Example 18

For Example 18, boron nitride particles with two different particle sizes (CFF 200-3, boron nitride agglomerates having a mean primary particle size of 3 µm and a mean agglomerate particle size d₅₀ of 200 µm, and CFF 200-15, boron nitride agglomerates having a mean primary particle size of 15 µm and a mean agglomerate particle size d₅₀ of 150 µm, both available from 3M Technical Ceramics, Kempten, Germany) are mixed with a ratio of 3 : 1. To 45.0 g of the boron nitride particles, 2.6 g of methyl cellulose (Culminal^{™} MC 3000 P, available from Ashland Inc., Covington, Kentucky, USA) and 5.3 g of an acrylic resin (SKresin 1390, available from S u. K Hoch GmbH, Regen, Germany) are added in a mixing bowl. Then, 40.0 ml deionized water are added and homogenized with a SpeedMixer^{™} (available from Hauschild & Co KG, Hamm, Germany) for 40 seconds at 800 rpm, for 60 seconds at 2000 rpm, and then for 240 seconds at 800 rpm. During mixing, a vacuum of 800 mbar is applied. Afterwards, the ink is rested to cool down. Thereby, an ink suitable for 3D printing, i.e. for extrusion and layer deposition, is obtained. The ink composition comprises a first additive and a second additive (see Table 1).

Extruding and depositing the ink composition are carried out as described for Example 1. After 3D printing a sample with dimensions of 20 x 20 x 5 mm³, the sample is dried and cured under a 250 W UV lamp (Albert Kerbl GmbH, Buchbach, Germany). The top side of the sample is cured for six hours, then the sample is turned upside down and cured again for six hours. The distance of the lamp to the sample is 35 cm. The obtained 3D printed ceramic green body is a highly filled ceramic composite body with 90% by weight of boron nitride and 10% by weight of organic material, as determined by using thermogravimetric measurement.

A sample with the dimension 10 x 10 x 2 mm³ is cut out of the 3D printed sample, in a direction parallel to the substrate, which is used to measure the through-plane thermal diffusivity and thermal conductivity. For measuring the in-plane thermal diffusivity and thermal conductivity, a sample with the dimension 13 x 13 x 1 mm³ is cut out of the 3D printed part, in a direction perpendicular to the substrate. For measuring the thermal diffusivity and the thermal conductivity, the laser-flash method is used and carried out with the Nanoflash LFA 447 (Netzsch, Selb, Germany) according to ISO 22007-4:2017. Measurements are taken at 25 °C. The densities of the samples were determined geometrically.

The in-plane thermal conductivity of the 3D printed composite material amounts to 6.1 W/m·K whereas the through-plane conductivity amounts to 2.8 W/m·K. The thermal diffusivity was 8.8 mm²/s measured in-plane and 3.6 mm²/s measured through-plane.

**Table 1**

| Example No. | Content of ceramics ^{a)} [wt.-%] | First additive | Content of first additive [wt.-%] | Second additive | Content of second additive [wt.-%] | Third additive | Content of third additive [wt.-%] | Content of water [wt.-%] | Weight loss [wt.-%] | Shrinkage [x/y/z in %] | Sintered density [g/cm³] | Sintered density [% TD] |
|---|---|---|---|---|---|---|---|---|---|---|---|---|
| EX1 | 70.0 | MC ^{b)} | 0.3 | PVB ^{c)} | 7.0 | - | - | 22.7 | 10 | 17/18/18 | 3.03 | 94 |
| EX2 | 65.0 | MC ^{b)} | 0.4 | PVB ^{c)} | 7.5 | - | - | 27.1 | 12 | 20/20/20 | 2.94 | 92 |
| EX3 | 71.0 | MC ^{b)} | 0.2 | PVB ^{c)} | 3.7 | - | - | 25.1 | 2 | 16/16/17 | 2.92 | 91 |
| EX4 | 68.0 | Dextrin | 0.3 | PVB ^{c)} | 7.0 | - | - | 24.7 | 9 | 18/19/17 | 2.95 | 92 |
| EX5 | 67.5 | AA ^{d)} | 0.3 | PVB ^{c)} | 7.0 | - | - | 25.2 | 11 | 19/20/19 | 3.04 | 95 |
| EX6 | 70.0 | Casein | 0.3 | PVB ^{c)} | 7.0 | - | - | 22.7 | 9 | 18/18/19 | 2.98 | 93 |
| EX7 | 71.0 | MC ^{b)} | 0.3 | PVOH ^{e)} | 7.0 | - | - | 21.7 | 6 | 16/17/19 | 3.10 | 97 |
| EX8 | 71.0 | MC ^{b)} | 0.2 | PEG ^{f)} | 4.3 | - | - | 24.5 | 6 | 16/16/17 | 2.89 | 90 |
| EX9 | 70.0 | MC ^{b)} | 0.3 | APM ^{g)} | 7.0 | - | - | 22.7 | 12 | 16/17/17 | 3.04 | 95 |
| EX10 | 70.0 | MC ^{b)} | 0.3 | PVB ^{c)} | 7.0 | Glycerol | 0.5 | 22.2 | 7 | 18/18/18 | 3.07 | 96 |
| EX11 | 69.9 | MC ^{b)} | 0.3 | PVB ^{c)} | 7.0 | F. A. ^{h)} | 0.2 | 22.6 | 9 | 18/19/21 | 3.05 | 95 |
| EX12 | 70.0 | MC ^{b)} | 0.3 | PVB ^{c)} | 7.0 | POSM ⁱ⁾ | 0.5 | 22.2 | 11 | 19/19/20 | 3.03 | 94 |
| EX13 | 68.0 | MC ^{b)} Dextrin | 0.3 0.5 | PVB ^{c)} APC ^{j)} | 6.8 0.8 | - | - | 23.6 | 11 | 21/19/19 | 3.02 | 94 |
| EX14 | 70.0 | MC | 0.6 | - | - | Glycerol | 0.5 | 28.9 | 6 | 14/16/14 | 2.98 | 93 |
| EX15 | 68.7 | MC ^{b)} | 1.0 | PVB ^{c)} | 6.5 | - | - | 23.8 | 11 | 22/21/20 | 3.25 | 99 |
| EX16 | 70.0 | MC ^{b)} | 2.0 | PVB ^{c)} | 0.5 | - | - | 27.5 | 5 | 21/19/21 | 3.26 | 99 |
| EX17 | 69.0 | MC ^{b)} | 2.0 | PVB ^{c)} | 3.5 | - | - | 25.5 | 10 | 22/20/18 | 3.26 | 99 |
| EX18 | 45.0 | MC ^{b)} | 2.6 | AR ^{k)} | 5.3 | - | - | 40.0 | - | - | - | - |

| | | | | | | | | | | | | |
|---|---|---|---|---|---|---|---|---|---|---|---|---|
| ^{a)} Refers to the content of the spray-dried granules (including ceramic additives) which were produced as described for the individual examples. ^{b)} MC stands for methyl cellulose. ^{c)} PVB stands for polyvinyl butyral. ^{d)} AA stands for ammonium alginate. ^{e)} PVOH stands for polyvinyl alcohol. ^{f)} PEG stands for polyethylene glycol. ^{g)} APM stands for ammonium polymethacrylate. ^{h)} F.A. stands for fatty acid. ^{l)} POSM stands for polyoxyethylene (20) sorbitan monostearate (polysorbat 60) ^{j)} APC stands for ammonium polycarboxylate. ^{k)} AR stands for acrylic resin. | | | | | | | | | | | | |

**Table 2:**

| **Material** | **Source (Location)** |
|---|---|
| Methyl cellulose: Culminal^{™} MC 3000 P | Ashland Inc., Covington, Kentucky, USA |
| Aqueous polyvinyl butyral (PVB) emulsion: Aquarez PVB 605 | Aquaspersions Ltd., Halifax, UK |
| Dextrin: Avedex 28 LA 21 | Avebe Industrial, Veendam, The Netherlands |
| Ammonium alginate (ammonium salt of alginic acid) | Carl Roth GmbH + Co. KG, Karlsruhe, Germany |
| Casein: ≥ 95% alkali-soluble | Carl Roth GmbH + Co. KG, Karlsruhe, Germany |
| Polyvinyl alcohol: Optapix PAF 35 | Zschimmer & Schwarz Chemie GmbH, Lahnstein, Germany |
| Polyethylene glycol: Pluriol E 1500 | BASF, Ludwigshafen, Germany |
| Ammonium polymethacrylate: Darvan C | Vanderbilt Minerals, LLC, Norwalk, CT, USA |
| Glycerol: ≥98% water-free | Carl Roth GmbH + Co. KG, Karlsruhe, Germany |
| Fatty Acid: Zusoplast 126/3 | Zschimmer & Schwarz Chemie GmbH, Lahnstein, Germany |
| Polyoxyethylene (20) sorbitan monostearate (polysorbat 60): Tween 60 | Carl Roth GmbH + Co. KG, Karlsruhe, Germany |
| Ammonium polycarboxylate: Targon 1128 | BK Giulini Chemie GmbH, Ladenburg, Germany |
| Acrylic resin: SKresin 1390 | S u. K Hoch GmbH, Regen, Germany |

## Claims

1. An ink composition for 3D printing, the ink composition comprising non-oxide ceramic particles,
a liquid, and
two additives selected from one of the following combinations:
(i) a first additive and a second additive,
(ii) a first additive and a third additive,
(iii) a second additive and a third additive,
and wherein the first additive is a polysaccharide, a polypeptide, or a combination thereof, and wherein the second additive is polyvinyl alcohol (PVA), a polyvinyl acetal, a polyether, a polyacrylate, a polycarboxylate, a polyvinyl ester, a polyester, a formaldehyde resin, a polyurethane, a polysiloxane, or a combination thereof, and wherein the third additive is a lubricant or a tenside, or a combination thereof.

2. The ink composition of claim 1, wherein the lubricant of the third additive is selected from the group consisting of a fatty acid, a triglyceride, an isoprenoide, glycerol, or combinations thereof.

3. The ink composition of claim 1 or 2, wherein the tenside of the third additive is an anionic tenside, a cationic tenside, a nonionic tenside, or a combination thereof.

4. The ink composition of any of claims 1 to 3, wherein the ink composition comprises the first additive, the second additive and the third additive.

5. The ink composition of any of claims 1 to 4, wherein the ink composition comprises the first additive and the second additive, and wherein the first additive comprises a polysaccharide, and wherein the second additive comprises a polyvinyl acetal, and wherein the polysaccharide preferably is methyl cellulose, and wherein the polyvinyl acetal preferably is polyvinyl butyral (PVB).

6. The ink composition of claim 5, wherein the ink composition further comprises the third additive, and wherein the third additive preferably is selected from the group comprising glycerol, a fatty acid, a tenside, or combinations thereof.

7. The ink composition of claim 5, wherein the first additive further comprises a further polysaccharide, and wherein the second additive further comprises a polycarboxylate, and wherein the further polysaccharide preferably is dextrin, and wherein the polycarboxylate preferably is ammonium polycarboxylate.

8. The ink composition of any of claims 1 to 4, wherein the ink composition comprises the first additive and the second additive, and wherein the first additive comprises a polysaccharide or a polypeptide, and wherein the second additive comprises a polyvinyl acetal, and wherein the polysaccharide preferably is methyl cellulose or dextrin or a salt of alginic acid, and wherein the polypeptide preferably is casein, and wherein the polyvinyl acetal preferably is polyvinyl butyral (PVB).

9. The ink composition of any of claims 1 to 4, wherein the ink composition comprises the first additive and the second additive, and wherein the first additive is a polysaccharide, and wherein the second additive is polyvinyl alcohol (PVA), a polyether, a polyacrylate, or a polyvinyl acetal, and wherein the polysaccharide preferably is methyl cellulose, and wherein the polyether preferably is polyethylene glycol (PEG), and wherein the polyacrylate preferably is ammonium polymethacrylate, and wherein the polyvinyl acetal preferably is polyvinyl butyral (PVB).

10. The ink composition of any of claims 1 to 4, wherein the ink composition comprises the first additive and the third additive, and wherein the first additive is a polysaccharide, and wherein the third additive is a lubricant, and wherein the polysaccharide preferably is methyl cellulose, and wherein the lubricant preferably is glycerol.

11. The ink composition of any of claims 1 to 10, wherein the non-oxide ceramic particles are selected from the group consisting of carbide particles, nitride particles, boride particles, and molybdenum disilicide particles, or mixtures thereof, and wherein the non-oxide ceramic particles preferably are selected from the group consisting of silicon carbide particles, silicon nitride particles, boron carbide particles, hexagonal boron nitride particles, titanium diboride particles, zirconium diboride particles, or mixtures thereof.

12. A process for making a ceramic green body by 3D printing comprising
providing an ink composition for 3D printing according to any of claims 1 to 11,
extruding the ink composition and depositing the extruded ink composition on a substrate layer by layer, and
post-processing the extruded ink composition,
thereby obtaining a 3D printed ceramic green body.

13. A process for making a sintered ceramic component part comprising
3D printing a ceramic green body by the process of claim 12,
debindering the 3D printed ceramic green body, and
sintering the ceramic green body to obtain a sintered ceramic component part.

14. A sintered ceramic component part made by the process of claim 13, wherein the sintered ceramic component part has a density of at least 90% of theoretical density.

15. The sintered ceramic component part of claim 14, wherein the sintered ceramic component part comprises pressureless sintered silicon carbide (SSiC), liquid phase sintered silicon carbide (LPS-SiC), gas-pressure sintered silicon nitride (SSN), pressureless sintered boron carbide or combinations thereof.
